# EUROPÄISCHE PATENTSCHRIFT

(11) **EP 2 980 966 B1**
(45) Veröffentlichungstag und Bekanntmachung des Hinweises auf die Patenterteilung: **21.06.2017**
(21) Anmeldenummer: 14002634.5
(22) Anmeldetag: 29.07.2014
(51) Int. Cl.: H02K 7/10, H02K 7/14

(54) **Elektromechanischer Aktuator**
Electromechanical actuator
Actionneur électromécanique

(43) Veröffentlichungstag der Anmeldung: 03.02.2016
(73) Patentinhaber: Lakeview Innovation Ltd., 6374 Buochs (CH)
(72) Erfinder: Teimel, Arnold, 6074 Giswill (CH); Ulrich, Patric, 6064 Kerns (CH)
(74) Vertreter: Grünecker Patent- und Rechtsanwälte PartG mbB

(56) Entgegenhaltungen:
- DE-U1- 8 603 323
- US-A- 1 974 257
- US-A- 2 821 602
- US-A- 4 353 426

## Beschreibung

Die vorliegende Erfindung betrifft einen elektromechanischen Aktuator, insbesondere einen elektromechanischen Aktuator zum Durchdringen einer Behälterwand, nach dem Oberbegriff des unabhängigen Anspruchs 1, vorzugsweise zur Verwendung in einem Sicherheitsbehälter zur Aufbewahrung von Wertgegenständen mit einer Vorrichtung zum Markieren der Wertgegenstände mit einer Markierungssubstanz.

Gattungsgemäße Aktuatoren werden beispielsweise in Bankautomaten oder Geldkoffern als Auslöser verwendet, wobei bei Gewaltanwendung die enthaltenen Banknoten oder Wertgegenstände durch Besprühen mit einem Farbstoff gekennzeichnet werden. Die Aktuatoren werden dazu verwendet, eine mit CO₂ gefüllte Kapsel aufzustechen. Das unter hohem Druck stehende Gas verteilt sich daraufhin explosionsartig, wobei der Druckanstieg dazu führt, dass ein mit Farbstoff gefüllter Farbbeutel platzt und sich der Farbstoff auf den Banknoten bzw. den Wertgegenständen verteilt.

Ein gattungsgemäßer Aktuator kann beispielsweise auch zum Auslösen eines Airbags verwendet werden, wobei ein unter Druck stehender Gas-Behälter angestochen wird, um den Airbag zu öffnen.

Eine weitere mögliche Verwendung gattungsgemäßer Aktuatoren ist bei Lawinenrucksäcken oder Schwimmwesten möglich, bei denen im Notfall ballonartige Körper schnell aufgeblasen werden, indem ein unter Druck stehender Gas-Behälter geöffnet oder angestochen wird.

Gattungsgemäße Aktuatoren müssen in axialer Richtung eine festgelegte Kraft aufbringen können, damit die Spitze die Behälterwand durchstechen kann. Insbesondere bei portablen Anwendungen steht dabei nur ein geringer Bauraum zur Verfügung. Zusätzlich stehen meistens nur Spannungsversorgungen mit geringer Spannung zur Verfügung. Es muss also mit wenig Energie bei geringem zur Verfügung stehenden Bauraum eine relativ große Kraft in kurzer Zeit erzeugt werden können.

Aus dem Stand der Technik sind gattungsgemäße Aktuatoren bekannt, bei denen ein Elektromotor mit einem Getriebe verbunden ist, wobei die Getriebespindel an einem Ende eine Spitze aufweist. Nachteilig ist bei solchen Aktuatoren, dass durch das zusätzliche Getriebe mehr Bauraum benötigt wird, und sich durch die vielen Einzelteile hohe Herstellungskosten ergeben. Außerdem muss zur Erzielung der nötigen Kräfte ein Untersetzungsgetriebe verwendet werden, wodurch sich jedoch die Auslösezeit erhöht, oder mehr Energie für schneller drehende Elektromotoren aufgewendet werden muss.

Aus dem Stand der Technik sind auch Vorrichtungen zum Durchdringen einer Behälterwand, insbesondere zum Öffnen einer Gaskartusche zur Verwendung in einem Sicherheitsbehälter oder Airbag bekannt, bei denen eine Sprengkapsel verwendet wird, um einen angespitzten Bolzen so stark zu beschleunigen, dass er die Behälterwand durchdringen kann. Nachteilig bei diesen Lösungen ist, dass durch die nötigen Sicherheitsvorkehrungen beim Umgang mit den Pyroelementen erhöhte Kosten bei der Herstellung und Lagerung entstehen.

Es ist daher die Aufgabe der vorliegenden Erfindung, einen elektromechanischen Aktuator der eingangs genannten Art bereitzustellen, der sich kostengünstig herstellen lässt, wenig Bauraum benötigt, auch bei geringer Versorgungsspannung schnell auslöst, und die nötige Kraft in axialer Richtung zum Durchdringen einer Behälterwand aufbringen kann.

Die Aufgabe wird gelöst durch die Merkmale des unabhängigen Anspruchs 1. Demnach liegt bei einem gattungsgemäßen elektromechanischen Aktuator dann eine erfindungsgemäße Lösung der Aufgabe vor, wenn die Welle mit der Stange koaxial verbunden ist, wobei die Stange entlang der Motorachse bewegbar, in Richtung der Spitze vorgespannt, und durch eine Auslöseeinrichtung gehalten ist, derart, dass die Stange durch Drehung des Rotors aus einer Halteposition in eine Auslöseposition überführbar ist, in der sich durch Lösen der Vorspannung die Stange in Richtung der Spitze zum Durchdringen der Behälterwand bewegt.

Die erfindungsgemäße Lösung bietet den Vorteil, dass durch den einfachen Aufbau des Aktuators die Montage erleichtert und die Herstellungskosten reduziert werden. Der erfindungsgemäße Aktuator lässt sich variabel einsetzen, da die zu erreichende Kraft zum Durchdringen der Behälterwand durch ein Anpassen der Vorspannung eingestellt werden kann. Die erfindungsgemäße Lösung benötigt nur wenig Energie und dadurch eine kleine Spannungsversorgung, da diese nur zur Drehung des Rotors des Elektromotors aus der Halteposition in die Auslöseposition benötigt wird und nicht zum Aufbringen der zum Durchstechen nötigen Kraft. Daher können sowohl eine kompakte Stromversorgung als auch ein kompakter Elektromotor verwendet werden, wodurch der benötigte Bauraum reduziert wird.

Ein erfindungsgemäßer elektromechanischer Aktuator kann Axialkräfte von über 100 N erzeugen. Dazu benötigt der erfindungsgemäße Aktuator eine Versorgungsspannung von 3V - 12V und eine Stromstärke von 0,2A - 1A. Die Abmessungen des Aktuators betragen dabei in etwa 5 cm - 15 cm Höhe bei einem Durchmesser von 1,5 cm - 5 cm. Die Auslösezeit eines erfindungsgemäßen Aktuators beträgt in etwa 1 ms - 5 ms.

Vorteilhafte Ausgestaltungen der vorliegenden Erfindung sind Gegenstand der Unteransprüche.

In einer bevorzugten Ausführungsform ist die Auslöseeinrichtung nach Art eines Schlüssel-Schloss-Prinzips ausgebildet, wobei die Auslöseeinrichtung ein Halteelement umfasst, und die Stange zumindest einen Halteabschnitt mit einem Vorsprung aufweist, wobei das Halteelement eine Öffnung oder Aussparung aufweist, welche die Motorachse zumindest teilweise umgibt, und sich der Querschnitt des Vorsprungs in der Halteposition in einer Ebene senkrecht zur Motorachse mit einer senkrechten Projektion des Halteelements zumindest teilweise überschneidet, und sich der Querschnitt des Vorsprungs in der Auslöseposition in einer Ebene senkrecht zur Motorachse mit einer senkrechten Projektion des Halteelements nicht überschneidet. Auf diese Weise lässt sich die Auslöseeinrichtung besonders einfach realisieren.

Besonders bevorzugt stehen der Vorsprung des Halteabschnitts und das Halteelement in der Halteposition miteinander in Kontakt. Dies ermöglicht eine besonders kompakte Bauweise des Aktuators.

Besonders bevorzugt besteht das Halteelement aus einem Material mit kleinem Gleitreibungskoeffizienten. Dadurch wird die für die Auslösung nötige Energie zur Drehung des Motors gegen die Reibung des Vorsprungs weiter reduziert.

Besonders bevorzugt besteht das Halteelement aus einem Material, welches eine hohe Flächenpressung aushalten kann. Dadurch lassen sich hohe Vorspannungskräfte realisieren, ohne dass massivere Halteelemente verwendet werden müssen.

In einer besonders bevorzugten Ausführungsform sind die Form der Öffnung oder der Aussparung und der Querschnitt des Vorsprungs im Wesentlichen korrespondierend ausgebildet, vorzugsweise rechteckig, besonders bevorzugt quadratisch. In dieser Ausführungsform ergibt sich in der Halteposition eine große Auflagefläche zwischen dem Halteelement und dem Halteabschnitt, wodurch sich die Vorspannung gleichmäßig auf das Halteelement verteilt, und sich höhere Vorspannungen realisieren lassen.

Es sind jedoch alternativ auch beliebige andere korrespondierende Formen der Öffnung und des Querschnitts möglich, die durch Drehen des Vorsprungs ineinander passen.

Besonders bevorzugt sind die Kanten des Vorsprungs und der Öffnung bzw. der Aussparung facettiert oder verrundet. Dadurch wird das Überführen der Stange von der Halteposition in die Auslöseposition vereinfacht, da bereits kurz vor Erreichen der Auslöseposition die Vorspannung durch die verrundeten Ecken zur noch nötigen Drehung der Stange beitragen kann. In dieser Ausführungsform können sowohl die axialen Kanten der Öffnung bzw. Aussparung und des Vorsprungs facettiert oder verrundet sein, als auch die Formkonturen der beiden Querschnitte.

In einer weiteren bevorzugten Ausführungsform weist der Halteabschnitt eine Bohrung senkrecht zur Motorachse auf, wobei in der Bohrung eine Lagerwelle angeordnet ist, die auf beiden Seiten der Bohrung durch zumindest ein Lager gelagert ist. Bei dieser Ausführungsform lässt sich die zur Auslösung nötige Energie weiter reduzieren, indem die Drehung der Stange von der Halteposition in die Auslöseposition vereinfacht wird. Durch die Lagerung der Lagerwelle wird die bei der Drehung auftretende Reibung reduziert. Besonders bevorzugt ist die Lagerwelle am Halteabschnitt gelagert. Dadurch ergibt sich ein besonders einfacher Aufbau der Auslöseeinrichtung.

In einer besonders bevorzugten Ausführungsform ist die Lagerwelle auf beiden Seiten der Bohrung mit zumindest einem Kugellager, umfassend einen Innenring und einen Außenring, verbunden. Vorzugsweise sind die beiden Innenringe mit der Lagerwelle fest verbunden, beispielsweise verpresst, verschweißt oder verklebt. In dieser Ausführungsform ist auch bei einer hohen Vorspannung nur eine geringe Energie zum Drehen der Stange in die Auslöseposition nötig, da nur die Rollreibung der Kugellager überwunden werden muss.

Besonders bevorzugt ist die Lagerwelle als kurzer Bolzen ausgebildet, der an seinen beiden Enden unmittelbar neben der Bohrung mit jeweils dem Innenring eines Kugellagers fest verbunden ist. Die Außenringe der Kugellager rollen auf einer Kreisbahn auf dem Halteelement, welches in der Auslöseposition der Stange eine Öffnung aufweist, durch die die Lagerwelle samt den Kugellagern hindurch passt. Dies ermöglicht einen besonders einfachen und kompakten Aufbau der Auslöseeinrichtung.

In einer weiteren bevorzugten Ausführungsform umfasst der Aktuator ein Motorgehäuse und einen Führungszylinder, wobei der Führungszylinder koaxial zur Motorachse angeordnet ist, die Welle zumindest auf der der Stange abgewandten Seite am Motorgehäuse drehbar gelagert, und die Stange im Führungszylinder drehbar gelagert und axial geführt ist. Die Gehäuse ermöglichen eine einfache Befestigung und sichere Unterbringung der einzelnen Bauteile.

Besonders bevorzugt ist die Stange über zumindest ein Kugellager, umfassend einen Innenring und einen Außenring, gelagert, wobei der Innenring mit der Stange verbunden, und der Außenring entlang der Rotorachse im Führungszylinder bewegbar ist. Ein Kugellager weißt eine geringe Reibung bei Rotation auf, wodurch die aufzubringende Energie zur Auslösung weiter reduziert wird.

Ganz besonders bevorzugt umfasst die Stange ein Befestigungselement, das mit der Stange fest verbunden ist, wobei das Befestigungselement einen radial nach außen stehenden Auflagebereich umfasst, auf dem der Innenring des Kugellagers aufliegt. Dadurch kann das Kugellager unabhängig von dem Durchmesser der Stange eingesetzt werden.

Alternativ ist es auch denkbar, dass der Innenring fest mit der Stange verbunden, beispielsweise verklemmt oder verschweißt ist.

In einer weiteren besonders bevorzugten Ausführungsform ist die Auslöseeinrichtung zwischen dem Motorgehäuse und dem Führungszylinder angeordnet, vorzugsweise in das Motorgehäuse oder den Führungszylinder integriert. Dies ermöglicht einen besonders kompakten Aufbau des Aktuators. Das Halteelement kann in das Motorgehäuse integriert sein, indem auf der der Stange zugewandten Seite des Motorgehäuses eine die Motorachse umschließende Öffnung mit entsprechender Form in der Motorgehäusewand ausgebildet ist. Diese bildet zusammen mit dem Halteabschnitt die Auslöseeinrichtung.

In einer weiteren bevorzugten Ausführungsform ist das Halteelement ein separates Bauteil, welches im Motorgehäuse oder im Führungszylinder angeordnet ist. Dabei kann das Halteelement aus einem Material, beispielsweise Keramik bestehen, um die Anforderungen an die Vorspannkraft oder die auftretenden Reibungskräfte beim Drehen der Stange zu erfüllen. Dies ermöglicht einen besonders variablen Aufbau des Aktuators.

Ganz besonders bevorzugt umfasst das Halteelement zur Befestigung Formschlusselemente, die mit korrespondierenden Formschlusselementen am Montageort zusammenwirken. Dadurch wird verhindert, dass sich das Halteelement bei Drehung des Rotors mit bewegt, falls der Vorsprung des Halteabschnitts mit dem Halteelement in Kontakt steht.

In einer weiteren bevorzugten Ausführungsform ist die Vorspannung durch eine komprimierte Druckfeder realisiert, wobei die Druckfeder koaxial zur Rotorachse angeordnet ist und zumindest im komprimierten Zustand axial an einem Anschlag der Stange anliegt. Dies ermöglicht einen besonders einfachen und kostengünstigen Aufbau des Aktuators. Darüber hinaus lässt sich die Vorspannung und der zur Durchdringung der Behälterwand benötigte Bewegungsweg der Stange über die Federkennlinie und den Spannweg der Druckfeder anpassen.

In einer besonders bevorzugten Ausführungsform weist der Führungszylinder einen radialen Flansch auf, wobei die Druckfeder innerhalb des Führungszylinders angeordnet ist und zumindest im komprimierten Zustand in axialer Richtung an dem Flansch und am Außenring des Kugellagers anliegt. Beim Drehen der Stange muss dadurch lediglich die Rollreibung des Kugellagers überwunden werden.

In einer weiteren bevorzugten Ausführungsform sind der Stator und der Rotor in der Halteposition so zueinander angeordnet, dass durch ein Aktivieren des Elektromotors ein maximales Drehmoment auf den Rotor wirkt. Dadurch können die Auslösezeit und die zur Auslösung benötigte Energie weiter reduziert werden.

In einer weiteren bevorzugten Ausführungsform sind der Stator und der Rotor in der Halteposition so zueinander angeordnet, dass durch ein Aktivieren des Elektromotors ein maximales Drehmoment erst nach einem kleinen Drehwinkel auf den Rotor wirkt. Dadurch lassen sich größere Drehwinkel verwirklichen.

In einer weiteren bevorzugten Ausführungsform ist die Auslöseeinrichtung so ausgebildet, dass der Drehwinkel zwischen der Halteposition und der Auslöseposition zwischen 5° und 40° beträgt.

In einer weiteren bevorzugten Ausführungsform umfasst der Stator zumindest eine Spulenwicklung, und der Rotor zumindest einen Permanentmagneten. Dies ermöglicht einen besonders einfachen Aufbau des Aktuators, da keine Kommutierung einer rotierenden Spulenwicklung benötigt wird. Vorzugsweise besteht die Spule aus einer eisenfreien Spulenwicklung und der Permanentmagnet ist diametral magnetisiert.

Alternativ ist es jedoch auch denkbar, dass ein mehrpoliger Magnet mit einer angepassten Beschaltung der Wicklung eingesetzt wird. Damit kann bei gleichem Versorgungsstrom mehr Drehmoment erzeugt werden.

In einer weiteren bevorzugten Ausführungsform ist der Rotor fest mit der Welle verbunden. Dadurch wird der Aufbau des Aktuators weiter vereinfacht, da keine Lagerung zwischen der Welle und dem Rotor ausgebildet sein muss.

In einer weiteren bevorzugten Ausführungsform ist die Welle entlang der Motorachse bewegbar, und die Welle und die Stange sind einteilig ausgebildet. Dadurch ergibt sich ein besonders einfacher Aufbau des Aktuators. Bei dieser Ausführungsform werden neben der Lagerung der Welle am Gehäuse und der Lagerung der Stange im Führungszylinder keine weiteren Lager benötigt.

In einer weiteren bevorzugten Ausführungsform greift die Welle mit einem am Ende ausgebildeten Formschlusselement in ein korrespondierendes Formschlusselement der Stange ein, wobei der Eingriff durch das Lösen der Vorspannung in der Auslöseposition aufgehoben wird. Dies ermöglicht den Einsatz eines Elektromotors, bei dem die Welle nicht entlang der Motorachse bewegbar ist.

In einer weiteren bevorzugten Ausführungsform sind das Motorgehäuse und der Führungszylinder einteilig ausgebildet. Dadurch werden der benötigte Bauraum des Aktuators und die Teileanzahl weiter reduziert.

Die vorliegende Erfindung stellt ferner eine Vorrichtung zum Durchdringen einer Behälterwand eines Behälters, umfassend einen erfindungsgemäßen Aktuator, bereit. Vorzugsweise umfasst die Vorrichtung einen elektromechanischen Aktuator nach einer der oben genannten vorteilhaften Ausführungsformen. Vorzugsweise umfasst die Vorrichtung einen Behälter mit einer Behälterwand, eine Steuereinheit, wobei die Steuereinheit mit dem Elektromotor des Aktuators elektrisch verbunden ist, und die Behälterwand entlang der Motorachse in Richtung der Spitze derart angeordnet ist, dass durch das Aktivieren des Elektromotors durch die Steuereinheit die Spitze der Stange die Behälterwand durchdringt. Die Steuereinheit kann dabei je nach Anwendungsgebiet mit einer passenden Stromversorgung verbunden sein.

In einer bevorzugten Ausführungsform verfügt die Vorrichtung über einen Sensor, der mit der Steuereinheit verbunden ist und der Steuereinheit Sensordaten zur Verfügung stellt, wobei die Steuereinheit die Sensordaten auswertet und davon abhängig den elektromechanischen Aktuator aktiviert.

In einer weiteren bevorzugten Ausführungsform ist der Abstand zwischen der Spitze und der Behälterwand in der Halteposition etwas geringer als die Strecke, die bei Auslösung des Aktuators von der Spitze zurückgelegt wird.

In einer weiteren bevorzugten Ausführungsform weist die Behälterwand entlang der Motorachse in Richtung der Spitze eine Sollbruchstelle auf, beispielsweise eine Membran oder eine durch ein leicht durchdringbares Material abgedeckte Öffnung. Dadurch kann die zum Durchdringen notwenige Axialkraft des Aktuators reduziert werden.

Ferner stellt die vorliegende Erfindung einen Sicherheitsbehälter zum Aufbewahren von Wertgegenständen zur Verfügung, wobei der Sicherheitsbehälter ein Aufbewahrungsvolumen definiert, umfassend eine erfindungsgemäße Vorrichtung zum Durchdringen einer Behälterwand eines Behälters. Vorzugsweise umfasst der Sicherheitsbehälter eine Vorrichtung mit den Merkmalen einer der oben genannten vorteilhaften Ausgestaltungen. Vorzugsweise ist der Behälter mit einem Gas gefüllt, dessen Druck größer ist als der Normaldruck, wobei der Sicherheitsbehälter des Weiteren einen Markierungsbehälter mit zumindest einer Eingangsöffnung und zumindest einer Ausgangsöffnung umfasst, der zumindest teilweise mit einer Markierungssubstanz gefüllt ist, wobei die Ausgangsöffnung mit dem Aufbewahrungsvolumen und die Eingangsöffnung mit der Behälterwand derart verbunden sind, dass das Durchdringen der Behälterwand durch die Vorrichtung ein Ausströmen des Gases aus dem Behälter durch die Eingangsöffnung und die Ausgangsöffnung des Markierungsbehälters in das Aufbewahrungsvolumen bewirkt, wobei die Markierungssubstanz durch das ausströmende Gas in das Aufbewahrungsvolumen transportiert wird, und mit den Wertgegenständen in Kontakt kommt.

Vorteilhafte Ausführungsbeispiele der vorliegenden Erfindung werden im Folgenden anhand von Zeichnungen näher erläutert. Es zeigen:
- Fig. 1: eine schematische Darstellung eines ersten Ausführungsbeispiels eines erfindungsgemäßen elektromechanischen Aktuators im Querschnitt,
- Fig. 2: eine schematische Darstellung des Aktuators aus Fig. 1 im Querschnitt,
- Fig. 3: eine schematische Darstellung eines zweiten Ausführungsbeispiels eines erfindungsgemäßen Aktuators im Querschnitt,
- Fig. 4: eine schematische Darstellung des Aktuators aus Fig. 3 im Querschnitt,
- Fig. 5: eine schematische Darstellung einer erfindungsgemäßen Vorrichtung, und
- Fig. 6: eine schematische Darstellung eines erfindungsgemäßen Sicherheitsbehälters im Querschnitt.

Für die folgenden Ausführungen gilt, dass gleiche Teile durch gleiche Bezugszeichen bezeichnet werden. Sofern in einer Zeichnung Bezugszeichen enthalten sind, auf die in der zugehörigen Figurenbeschreibung nicht eingegangen wird, so wird auf vorangegangene oder nachfolgende Figurenbeschreibungen Bezug genommen.

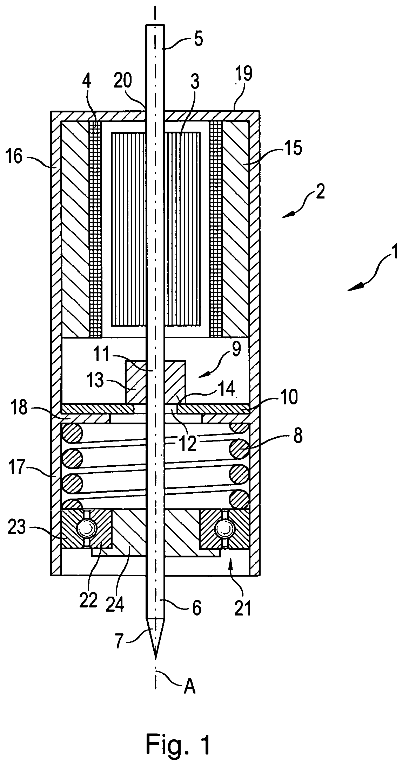

Der in Fig. 1 dargestellte erfindungsgemäße elektromechanische Aktuator 1 weist einen Elektromotor 2 mit einem Rotor 3, einem Stator 4 und einer Welle 5 auf. Koaxial zur Welle 5 ist eine Stange 6 mit einer Spitze 7 angeordnet. Im dargestellten Ausführungsbeispiel sind Welle 5 und Stange 6 einteilig ausgebildet. Es ist jedoch auch denkbar, dass Welle 5 und Stange 6 über korrespondierende Formschlusselemente stirnseitig verbunden sind und zusammenwirken. Die Stange 6 ist entlang der Motorachse A bewegbar und in Richtung der Spitze 7 vorgespannt. In der dargestellten Ausführungsform wird die Vorspannung durch eine komprimierte Druckfeder 8 realisiert. Die Auslöseeinrichtung 9 ist zwischen der Druckfeder 8 und dem Elektromotor 2 angeordnet und weist ein mit dem Gehäuse 16 des Aktuators verbundenes Halteelement 10 und einen damit zusammenwirkenden Halteabschnitt 11 der Stange 6 auf.

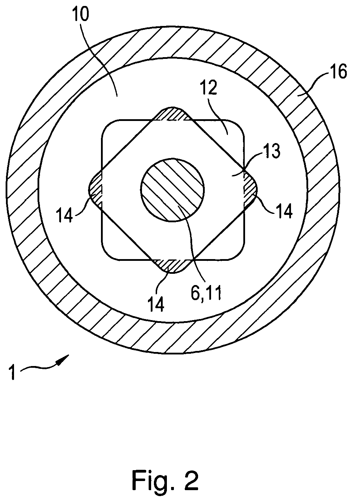

Wie in Fig. 2 dargestellt, weist das Halteelement 10 eine Öffnung 12 auf, die die Motorachse A vollständig umgibt. Die Form der Öffnung 12 ist quadratisch. Der Halteabschnitt 11 weist einen Vorsprung 13 auf, der wie in Fig. 2 dargestellt, einen quadratischen Querschnitt hat. Die Form der Öffnung 12 und der Querschnitt des Vorsprungs 13 sind korrespondierend ausgebildet, wobei die Ecken, Kanten und Formkonturen verrundet sind, und ein geringes Spiel besteht, damit der Vorsprung 13 in der Auslöseposition durch die Öffnung 12 des Halteelements 10 passt. Halteabschnitt 11 und Halteelement 10 arbeiten nach Art eines Schlüssel-Schloss-Prinzips zusammen. In der dargestellten Halteposition überschneiden sich der Vorsprung 13 und das Halteelement 10 im Bereich der Auflagefläche 14. Das dargestellte Halteelement 10 besteht aus einer Keramik mit niedrigem Gleitreibungskoeffizienten. In der dargestellten Ausführungsform beträgt der Drehwinkel zwischen der Halteposition und der Auslöseposition in beiden Drehrichtungen 45°.

In der dargestellten Ausführungsform ist der Rotor 3 ein Permanentmagnet, und der Stator 4 eine Spulenwicklung innerhalb eines Rückschlusses 15. Der Aktuator 1 weist ein Motorgehäuse 16 sowie einen Führungszylinder 17 auf. In der dargestellten Ausführungsform sind die beiden Gehäuse 16, 17 einteilig ausgebildet, zylinderförmig und gehen bündig ineinander über. Der Führungszylinder 17 weist einen Flansch 18 auf, an dem die Druckfeder 8 anliegt. Der Flansch 18 ist gleichzeitig Teil des Motorgehäuses 16 und weist eine Öffnung 12 für die Welle 5 auf. An seiner Oberseite 19 weist das Motorgehäuse 16 eine Öffnung 20 auf, in der die Welle 5 drehbar gelagert ist. Alternativ ist es auch denkbar, die Welle 5 mit einem Kugellager 21 am Motorgehäuse 16 zu lagern.

Die Stange 6 ist über ein Kugellager 21 drehbar am Führungszylinder 17 gelagert. Das Kugellager 21 weist einen Innenring 22 und einen Außenring 23 auf, wobei der Außenring 23 mit etwas Spiel im Führungszylinder 17 entlang der Motorachse A bewegbar ist. Das untere Ende der Druckfeder 8 liegt in der dargestellten Halteposition am Außenring 23 des Kugellagers 21 an. Die Stange 6 ist fest mit einem Befestigungselement 24 verbunden, welches einen radial nach außen verlaufenden Auflagebereich aufweist, auf dem der Innenring 22 des Kugellagers 21 aufliegt. Alternativ ist es auch denkbar, den Innenring 22 des Kugellagers 21 direkt mit der Stange 6 zu verbinden, indem der Innenring beispielsweise mit der Stange 6 verschweißt oder verpresst wird.

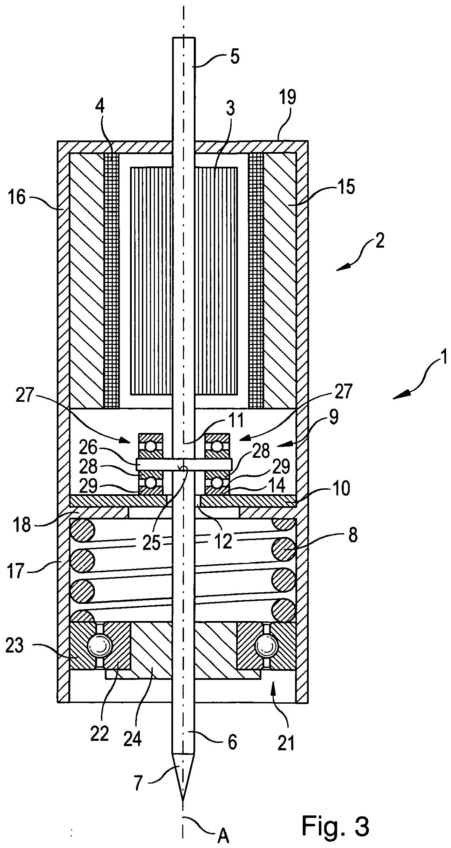

Das in der Fig. 3 dargestellte Ausführungsbeispiel entspricht dem Ausführungsbeispiel der Fig. 1, die Auslöseeinrichtung 9 ist jedoch anders ausgebildet. Im Halteabschnitt 11 weist die Stange 6 eine Bohrung 25 auf, in der eine Lagerwelle 26 aufgenommen ist. Auf beiden Seiten der Bohrung 25 ist die Lagerwelle 26 drehbar am Halteelement 10 gelagert. In der dargestellten Ausführungsform ist die Lagerwelle 26 auf beiden Seiten jeweils fest mit dem Innenring 28 eines Kugellagers 21 verbunden. Der Außenring 29 liegt auf dem Halteelement 10 auf.

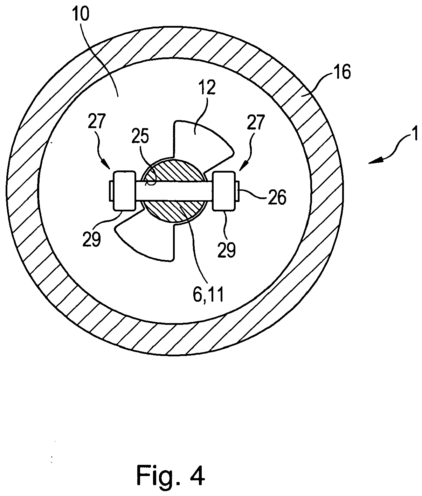

Wie in Fig. 4 dargestellt, weist die Öffnung 12 des Halteelements 10 zwei Kreissegmente auf, die so geformt sind, dass Lagerwelle 26 und Kugellager 21 in der Auslöseposition durch die Öffnung 12 hindurch passen. In der dargestellten Ausführungsform wird der Elektromotor 2 so aktiviert, dass sich die Welle 5 in Fig. 4 entgegen dem Uhrzeigersinn dreht.

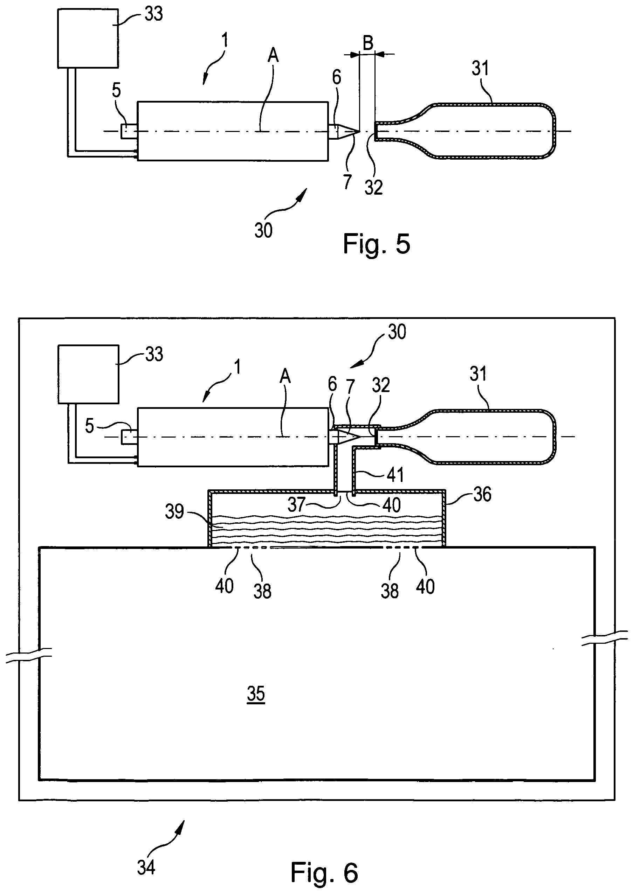

In Fig. 5 ist eine erfindungsgemäße Vorrichtung 30 zum Durchdringen einer Behälterwand 32 dargestellt. Die Vorrichtung 30 weist einen erfindungsgemäßen Aktuator 1, einen Behälter 31 mit einer Behälterwand 32 und eine Steuereinheit 33 auf. Die zu durchstechende Behälterwand 32 ist entlang der Motorachse A vor der Spitze 7 angeordnet. Dabei ist der Abstand B zwischen der Spitze 7 und der Behälterwand 32 in der Halteposition etwas kleiner als die von der Spitze 7 zurückgelegte Strecke bei Auslösung des Aktuators. Ist beispielsweise die Vorspannung durch eine Druckfeder 8 realisiert, ist der Abstand B zwischen der Spitze 7 und der Behälterwand 32 etwas kleiner als der Spannweg der komprimierten Druckfeder 8. In der dargestellten Ausführungsform ist der Behälter 31 mit einem Gas gefüllt, wobei das Gas einen höheren Druck als den Umgebungsdruck hat.

Die Fig. 6 zeigt einen erfindungsgemäßen Sicherheitsbehälter 34 zur Aufbewahrung von Wertgegenständen, wobei der Sicherheitsbehälter 34 ein Aufbewahrungsvolumen 35 definiert. Innerhalb des Sicherheitsbehälters 34 ist eine erfindungsgemäße Vorrichtung 30 angeordnet, wobei die Abmessungen der Vorrichtung sehr viel kleiner sind als die Abmessungen des Aufbewahrungsvolumens 35. Der Behälter 31 ist mit einem Gas gefüllt, dessen Druck größer ist als der Umgebungsdruck. Des Weiteren weist der Sicherheitsbehälter 34 einen Markierungsbehälter 36 auf, der über eine Eingangsöffnung 37 und zwei Ausgangsöffnungen 38 verfügt. Der Markierungsbehälter 36 ist mit einer Markierungssubstanz 39 gefüllt. In der dargestellten Ausführungsform ist die Markierungssubstanz 39 eine farbige Flüssigkeit. Die Eingangsöffnung 37 und die beiden Ausgangsöffnungen 38 sind durch Membrane 40 verschlossen, die über Sollbruchstellen verfügen. Die Eingangsöffnung 37 des Markierungsbehälters 36 ist über einen Kanal 41 mit der zu durchdringenden Behälterwand 32 des Behälters 31 verbunden. Die Spitze 7 des Aktuators 1 ist in einer Öffnung 12 des Kanals 41 angeordnet, wobei der Kanal 41 gegen die Stange 6 des Aktuators 1 abgedichtet ist. Sobald die Steuereinheit 33 den Elektromotor 2 des Aktuators 1 aktiviert, wird dieser aus der Halteposition in die Auslöseposition überführt. Die Vorspannung löst sich und die Spitze 7 der Stange 6 bewegt sich in Richtung der Behälterwand 32. Nachdem die Behälterwand 32 durchdrungen ist, strömt das unter Druck stehende Gas aus dem Behälter 31 in den Kanal 41. Das unter hohem Druck strömende Gas zerstört die Membran 40, die die Eingangsöffnung 37 des Markierungsbehälters 36 verschließt, woraufhin sich auch der Druck im Markierungsbehälter 36 erhöht. Sobald der Druck im Markierungsbehälter 36 ausreichend hoch ist, werden auch die Membrane 40 zerstört, die die Ausgangsöffnungen 38 des Markierungsbehälters 36 verschließen. Danach strömt das Gas in das Aufbewahrungsvolumen 35 und transportiert dabei die Markierungssubstanz 39 in das Aufbewahrungsvolumen 35. Dort kommt die Markierungssubstanz mit den nicht dargestellten zu markierenden Wertgegenständen in Kontakt.

## Patentansprüche

1. Elektromechanischer Aktuator (1), umfassend einen Elektromotor (2), umfassend eine Welle (5), einen Stator (4) und einen Rotor (3), wobei die Welle (5) drehfest mit dem Rotor (3) verbunden ist, und der Aktuator (1) des Weiteren eine Stange (6) mit einer Spitze (7) zum Durchdringen einer Behälterwand (32) umfasst, **dadurch gekennzeichnet, dass** die Welle (5) mit der Stange (6) koaxial verbunden ist, wobei die Stange (6) entlang der Motorachse (A) bewegbar, in Richtung der Spitze (7) vorgespannt, und durch eine Auslöseeinrichtung (9) gehalten ist, derart, dass die Stange (6) durch Drehung des Rotors (3) aus einer Halteposition in eine Auslöseposition überführbar ist, in der sich durch Lösen der Vorspannung die Stange (6) in Richtung der Spitze (7) zum Durchdringen der Behälterwand (32) bewegt.

2. Elektromechanischer Aktuator (1) nach Anspruch 1, **dadurch gekennzeichnet, dass** die Auslöseeinrichtung nach Art eines Schlüssel-Schloss-Prinzips ausgebildet ist, wobei die Auslöseeinrichtung ein Halteelement (10) umfasst, und die Stange (6) zumindest einen Halteabschnitt (11) mit einem Vorsprung (13) aufweist, wobei das Halteelement (10) eine Öffnung (12) oder Aussparung aufweist, welche die Motorachse (A) zumindest teilweise umgibt, und sich der Querschnitt des Vorsprungs (13) in der Halteposition in einer Ebene senkrecht zur Motorachse (A) mit einer senkrechten Projektion des Halteelements (10) zumindest teilweise überschneidet, und sich der Querschnitt des Vorsprungs (13) in der Auslöseposition in einer Ebene senkrecht zur Motorachse (A) mit einer senkrechten Projektion des Halteelements (10) nicht überschneidet.

3. Elektromechanischer Aktuator (1) nach Anspruch 2, **dadurch gekennzeichnet, dass** die Form der Öffnung (12) oder Aussparung und der Querschnitt des Halteabschnitts (11) korrespondierend ausgebildet sind, vorzugsweise rechteckig, besonders bevorzugt quadratisch.

4. Elektromechanischer Aktuator (1) nach einem der Ansprüche 2 bis 3, **dadurch gekennzeichnet, dass** der Halteabschnitt (11) eine Bohrung (25) senkrecht zur Motorachse (A) aufweist, wobei in der Bohrung (25) eine Lagerwelle (26) angeordnet ist, die auf beiden Seiten der Bohrung (25) durch zumindest ein Lager (27) gelagert ist.

5. Elektromechanischer Aktuator (1) nach einem der vorherigen Ansprüche, **dadurch gekennzeichnet, dass** der Aktuator (1) ein Motorgehäuse (16) und einen Führungszylinder (17) umfasst, wobei der Führungszylinder (17) koaxial zur Motorachse (A) angeordnet, die Welle (5) zumindest auf der der Stange (6) abgewandten Seite am Motorgehäuse drehbar gelagert, und die Stange (6) im Führungszylinder (17) drehbar gelagert und axial geführt ist.

6. Elektromechanischer Aktuator (1) nach Anspruch 5, **dadurch gekennzeichnet, dass** die Auslöseeinrichtung (9) zwischen dem Motorgehäuse (16) und dem Führungszylinder (17) angeordnet ist, vorzugsweise in das Motorgehäuse (16) oder den Führungszylinder (17) integriert ist.

7. Elektromechanischer Aktuator (1) nach einem der vorherigen Ansprüche, **dadurch gekennzeichnet, dass** die Vorspannung durch eine komprimierte Druckfeder (8) realisiert ist, wobei die Druckfeder (8) koaxial zur Motorachse (A)angeordnet ist und zumindest im komprimierten Zustand axial an einem Anschlag der Stange (6) anliegt.

8. Elektromechanischer Aktuator (1) nach einem der vorherigen Ansprüche, **dadurch gekennzeichnet, dass** Stator (4) und Rotor (3) in der Halteposition so zueinander angeordnet sind, dass durch ein Aktivieren des Elektromotors (2) ein maximales Drehmoment auf den Rotor (3) wirkt.

9. Elektromechanischer Aktuator (1) nach einem der vorherigen Ansprüche, **dadurch gekennzeichnet, dass** der Stator (4) zumindest eine Spule (4), und der Rotor (3) zumindest einen Permanentmagneten umfasst.

10. Elektromechanischer Aktuator (1) nach einem der vorherigen Ansprüche, **dadurch gekennzeichnet, dass** der Rotor (3) fest mit der Welle (5) verbunden ist.

11. Elektromechanischer Aktuator (1) nach einem der vorherigen Ansprüche, **dadurch gekennzeichnet, dass** die Welle (5) entlang der Motorachse (A) bewegbar ist, und die Welle (5) und die Stange (6) einteilig ausgebildet sind.

12. Elektromechanischer Aktuator (1) nach einem der vorherigen Ansprüche, **dadurch gekennzeichnet, dass** das Motorgehäuse und der Führungszylinder (17) einteilig ausgebildet sind.

13. Vorrichtung (30) zum Durchdringen einer Behälterwand (32), **dadurch gekennzeichnet, dass** die Vorrichtung (30) einen elektromechanischen Aktuator (1) nach einem der vorherigen Ansprüche, einen Behälter (31) mit einer Behälterwand (32) und eine Steuereinheit (33) umfasst, die Steuereinheit (33) mit dem Elektromotor (2) des Aktuators (1) elektrisch verbunden ist, und die Behälterwand (32) entlang der Motorachse (A) in Richtung der Spitze (7) derart angeordnet ist, dass durch das Aktivieren des Elektromotors (2) die Spitze (7) die Behälterwand (32) durchbringt.

14. Sicherheitsbehälter (34) zum Aufbewahren von Wertgegenständen, wobei der Sicherheitsbehälter (34) ein Aufbewahrungsvolumen (35) definiert, **dadurch gekennzeichnet, dass** der Sicherheitsbehälter (34) eine Vorrichtung (30) nach Anspruch 13 umfasst, der Behälter (31) mit einem Gas gefüllt ist, dessen Druck größer ist als der Normaldruck, wobei der Sicherheitsbehälter (34) des Weiteren einen Markierungsbehälter (36) mit zumindest einer Eingangsöffnung (37) und zumindest einer Ausgangsöffnung (38) umfasst, der zumindest teilweise mit einer Markierungssubstanz (39) gefüllt ist, wobei die Ausgangsöffnung (38) mit dem Aufbewahrungsvolumen (35) und die Eingangsöffnung (37) mit der Behälterwand (32) derart verbunden sind, dass das Durchdringen der Behälterwand (32) durch die Vorrichtung (30) ein Ausströmen des Gases aus dem Behälter (31) durch die Eingangsöffnung (37) und die Ausgangsöffnung (38) des Markierungsbehälters (36) in das Aufbewahrungsvolumen (35) bewirkt, wobei die Markierungssubstanz (39) durch das strömende Gas in das Aufbewahrungsvolumen (35) transportiert wird und mit den Wertgegenständen in Kontakt kommt.

## Claims

1. Electromechanical actuator (1), comprising an electric motor (2), comprising a shaft (5), a stator (4) and a rotor (3), the shaft (5) being rotationally fixedly connected to the rotor (3), and the actuator (1) further comprising a rod (6) with a tip (7) for penetrating a container wall (32), **characterized in that** the shaft (5) is coaxially connected to the rod (6), wherein the rod (6) is preloaded to be movable along the motor axis (A) in the direction of the tip (7) and is held by a release device (9) such that the rod (6) is transferable by rotation of the rotor (3) from a holding position into a release position in which by release of the preload the rod (6) moves in the direction of the tip (7) for penetrating the container wall (32).

2. Electromechanical actuator (1) according to claim 1, **characterized in that** the release device is configured according to a key-lock principle, wherein the release device comprises a holding element (10), and the rod (6) comprises at least one holding section (11) with a protrusion (13), wherein the holding element (10) comprises an opening (12) or recess which at least partly surrounds the motor axis (A), and the cross section of the protrusion (13) in the holding position in a plane perpendicular to the motor axis (A) overlaps at least in part with a vertical projection of the holding element (10), and the cross section of the protrusion (13) in the release position in a plane perpendicular to the motor axis (A) does not overlap with a vertical projection of the holding element (10).

3. Electromechanical actuator (1) according to claim 2, **characterized in that** the shape of the opening (12) or recess and the cross section of the holding section (11) are made to correspond to each other, particularly rectangular, preferably square.

4. Electromechanical actuator (1) according to any one of claims 2 to 3, **characterized in that** the holding section (11) comprises a bore (25) perpendicular to the motor axis (A), wherein a bearing shaft (26) which is supported at both sides of the bore (25) by at least one bearing (27) is arranged in the bore (25).

5. Electromechanical actuator (1) according to any one of the preceding claims, **characterized in that** the actuator (1) comprises a motor housing (16) and a guide cylinder (17), wherein the guide cylinder (17) is arranged to be coaxial to the motor axis (A), the shaft (5) is rotatably supported on the motor housing at least at the side facing away from the rod (6), and the rod (6) is rotatably supported in the guide cylinder (17) and axially guided.

6. Electromechanical actuator (1) according to claim 5, **characterized in that** the release device (9) is arranged between the motor housing (16) and the guide cylinder (17), preferably in the motor housing (16) or the guide cylinder (17).

7. Electromechanical actuator (1) according to any one of the preceding claims, **characterized in that** the preload is implemented by a compressed pressure spring (8), wherein the pressure spring (8) is arranged to be coaxial to the motor axis (A) and abuts at least in the compressed state axially on a stop of the rod (6).

8. Electromechanical actuator (1) according to any one of the preceding claims, **characterized in that** stator (4) and rotor (5) are arranged in the holding position relative to each other such that by activation of the electric motor (2) a maximum torque acts on the rotor (3).

9. Electromechanical actuator (1) according to any one of the preceding claims, **characterized in that** the stator (4) comprises at least one coil (4), and the rotor (3) comprises at least one permanent magnet.

10. Electromechanical actuator (1) according to any one of the preceding claims, **characterized in that** the rotor (3) is firmly connected to the shaft (5).

11. Electromechanical actuator (1) according to any one of the preceding claims, **characterized in that** the shaft (4) is movable along the motor axis (A), and the shaft (5) and the rod (6) are made as one part.

12. Electromechanical actuator (1) according to any one of the preceding claims, **characterized in that** the motor housing and the guide cylinder (17) are made as one part.

13. Device (30) for penetrating a container wall (32), **characterized in that** the device (30) comprises an electromechanical actuator (1) according to any one of the preceding claims, a container (31) with a container wall (32) and a control unit (33), the control unit (33) is electrically connected to the electric motor (2) of the actuator (1), and the container wall (3) is arranged along the motor axis (A) in the direction of the tip (7) in such a manner that by activation of the electric motor (2) the tip (7) penetrates the container wall (32).

14. Security container (34) for storing valuables, the security container (34) defining a storage volume (35), **characterized in that** the security container (34) comprises a device (30) according to claim 13, the container (31) is filled with a gas having a pressure greater than the standard pressure, wherein the security container (34) further comprises a marking container (36) having at least one inlet opening (37) and at least one outlet opening (38), which is filled at least in part with a marking substance (39), wherein the outlet opening (38) is connected to the storage volume (35) and the inlet opening (37) to the container wall (32) in such a manner that the penetration of the container wall (32) by the device (30) causes an outflow of the gas out of the container (31) through the inlet opening (37) and the outlet opening (38) of the marking container (36) into the storage volume (35), wherein the marking substance (39) is transported by the flowing gas into the storage volume (35) and gets into contact with the valuables.

## Revendications

1. Actionneur électromécanique (1) comprenant un moteur électrique (2) doté d'un arbre (5), d'un stator (4) et d'un rotor (3), l'arbre (5) étant relié de manière fixe en rotation au rotor (3), et l'actionneur (1) comprenant par ailleurs une tige (6) avec une pointe (7) pour transpercer une paroi de récipient (32), **caractérisé en ce que** l'arbre (5) est relié coaxialement à la tige (6), la tige (6) étant mobile le long de l'axe de moteur (A), précontrainte en direction de la pointe (7) et retenue par un dispositif de déclenchement (9), de manière telle que la tige (6), par rotation du rotor (3), puisse être transférée d'une position de retenue à une position de déclenchement dans laquelle, par libération de la précontrainte, la tige (6) se déplace en direction de la pointe (7) pour transpercer la paroi de récipient (32).

2. Actionneur électromécanique (1) selon la revendication 1, **caractérisé en ce que** le dispositif de déclenchement est conçu à la manière du principe d'une serrure à clé, **en ce que** le dispositif de déclenchement comporte un élément de retenue (10), et la tige (6) présente au moins un tronçon de retenue (11) avec une protubérance (13), et **en ce que** l'élément de retenue (10) comporte une ouverture (12) ou un évidement, qui entoure au moins partiellement l'axe de moteur (A), et la section transversale de la protubérance (13), dans la position de retenue, recoupe au moins partiellement, dans un plan perpendiculaire à l'axe de moteur (A), une projection orthogonale de l'élément de retenue (10), et la section transversale de la protubérance (13), dans la position de déclenchement, ne recoupe pas, dans un plan perpendiculaire à l'axe de moteur (A), une projection orthogonale de l'élément de retenue (10).

3. Actionneur électromécanique (1) selon la revendication 2, **caractérisé en ce que** la forme de l'ouverture (12) ou de l'évidement et la section transversale du tronçon de retenue (11) sont de configuration correspondante, de préférence rectangulaire, et de manière particulièrement préférée carrée.

4. Actionneur électromécanique (1) selon l'une des revendications 2 à 3, **caractérisé en ce que** le tronçon de retenue (11) présente un alésage (25) perpendiculairement à l'axe de moteur (A), un arbre de palier (26) étant agencé dans l'alésage (25) et monté sur au moins un palier (27) des deux côtés de l'alésage (25).

5. Actionneur électromécanique (1) selon l'une des revendications précédentes, **caractérisé en ce que** l'actionneur (1) comprend un boitier de moteur (16) et un cylindre de guidage (17), et **en ce que** le cylindre de guidage (17) est agencé coaxialement à l'axe de moteur (A), l'arbre (5) est monté en rotation dans le boitier de moteur, au moins sur le côté opposé à celui où se trouve la tige (6), et la tige (6) est montée rotative et guidée axialement dans le cylindre de guidage (17).

6. Actionneur électromécanique (1) selon la revendication 5, **caractérisé en ce que** le dispositif de déclenchement (9) est agencé entre le boitier de moteur (16) et le cylindre de guidage (17), et est de préférence intégré dans le boitier de moteur (16) ou le cylindre de guidage (17).

7. Actionneur électromécanique (1) selon l'une des revendications précédentes, **caractérisé en ce que** la précontrainte est réalisée par un ressort de compression (8) comprimé, et **en ce que** le ressort de compression (8) est agencé coaxialement à l'axe de moteur (A) et s'appuie, au moins dans l'état comprimé, axialement contre une butée de la tige (6).

8. Actionneur électromécanique (1) selon l'une des revendications précédentes, **caractérisé en ce que** dans la position de retenue, le stator (4) et le rotor (3) sont agencés l'un par rapport à l'autre de manière telle, que par une activation du moteur électrique (2), un couple maximal agisse sur le rotor (3).

9. Actionneur électromécanique (1) selon l'une des revendications précédentes, **caractérisé en ce que** le stator (4) comprend au moins une bobine (4), et le rotor (3) au moins un aimant permanent.

10. Actionneur électromécanique (1) selon l'une des revendications précédentes, **caractérisé en ce que** le rotor (3) est relié de manière fixe à l'arbre (5).

11. Actionneur électromécanique (1) selon l'une des revendications précédentes, **caractérisé en ce que** l'arbre (5) est mobile le long de l'axe de moteur (A), et l'arbre (5) et la tige (6) sont réalisés d'un seul tenant.

12. Actionneur électromécanique (1) selon l'une des revendications précédentes, **caractérisé en ce que** le boitier de moteur et le cylindre de guidage (17) sont réalisés d'un seul tenant.

13. Dispositif (30) pour transpercer une paroi de récipient (32), **caractérisé en ce que** le dispositif (30) comprend un actionneur électromécanique (1) selon l'une des revendications précédentes, un récipient (31) avec une paroi de contenant (32), et une unité de commande (33), **en ce que** l'unité de commande (33) est reliée électriquement au moteur électrique (2) de l'actionneur (1), et **en ce que** la paroi de récipient (32) est agencée le long de l'axe de moteur (A) en direction de la pointe (7) de manière telle, que par l'activation du moteur électrique (2), la pointe (7) transperce la paroi de récipient (32).

14. Récipient de sécurité (34) destiné à stocker des objets de valeur, le récipient de sécurité (34) définissant un volume de stockage (35), **caractérisé en ce que** le récipient de sécurité (34) comprend un dispositif (30) selon la revendication 13, **en ce que** le récipient (31) est rempli d'un gaz dont la pression est supérieure à la pression normale, **en ce que** le récipient de sécurité (34) comprend en outre, un récipient de marquage (36) avec au moins une ouverture d'entrée (37) et au moins une ouverture de sortie (38), qui est rempli au moins partiellement d'une substance de marquage (39), **en ce que** l'ouverture de sortie (38) est reliée au volume de stockage (35) et l'ouverture d'entrée (37) est reliée à la paroi de récipient (32) de manière telle, que le transpercement de la paroi de récipient (32) par le dispositif (30) produise un écoulement du gaz hors du récipient (31) jusque dans le volume de stockage (35) à travers l'ouverture d'entrée (37) et l'ouverture de sortie (38) du récipient de marquage (36), et **en ce que** la substance de marquage (39) est transportée par le gaz en écoulement dans le volume de stockage (35), et entre en contact avec les objets de valeur.
